# EUROPÄISCHE PATENTSCHRIFT

(11) **EP 1 737 612 B1**
(45) Veröffentlichungstag und Bekanntmachung des Hinweises auf die Patenterteilung: **05.12.2007**
(21) Anmeldenummer: 05717157.1
(22) Anmeldetag: 29.03.2005
(51) Int. Cl.: B23Q 7/14, B23Q 37/00, B23P 21/00

(54) **MODULARES TRANSFERSYSTEM FÜR WERKSTÜCKE**
MODULAR TRANSFER SYSTEM FOR WORKPIECES
SYSTEME MODULAIRE DE TRANSFERT DE PIECES

(30) Priorität: 30.03.2004 DE 102004016086; 18.06.2004 DE 102004029665
(43) Veröffentlichungstag der Anmeldung: 03.01.2007
(73) Patentinhaber: Continental Teves AG & Co. oHG, 60488 Frankfurt am Main (DE)
(72) Erfinder: MERTENS, Karl-Heinz, 61169 Friedberg (DE); MEIER, Peter, 65929 Frankfurt/Main (DE); GOCKEL, Detlef, 65760 Eschborn (DE)
(86) Internationale Anmeldenummer: PCT/EP2005/051417
(87) Internationale Veröffentlichungsnummer: WO 2005/095049

(56) Entgegenhaltungen:
- EP-A- 0 409 190
- US-A- 4 492 297
- US-A1- 2002 084 701

## Beschreibung

Die Erfindung betrifft ein modulares Transfersystem für Werkstücke.

Derartige Transfersysteme, auch Transferstrassen genannt, sind beispielsweise aus US 4 492 297, EP 0 409 190 und US 2002 008471 bekannt. Aus dem Invest Report 1/1999, S. 11 der Fa. Bosch ist beispielsweise das Transfersystem MTS 2 bekannt. Das Transfersystem MTS 2 ist modular aufgebaut und umfasst voll funktionsfähige Einheiten mit Automatikstationen und manuellen Arbeitsplätzen. Es sind voll funktionsfähige Module betreffend Mechanik, Steuerung sowie elektrische und pneumatische Installation innerhalb kompletter Funktionsgruppen gebildet, welche zur Installation mittels dreier Steckverbinder miteinander verbunden werden. Der Transport von Werkstückträgern erfolgt über Transportriemen, und jedes Modul des Transfersystems verfügt über einen eigenen Motor zum Antrieb des Transportriemens.

Es ist eine Aufgabe der vorliegenden Erfindung, ein Transfersystem bereit zu stellen, welches eine noch größere Flexibilität erlaubt. Obwohl bekannte Transfersysteme einen gewissen Grad an Flexibilität bei der Transferstrassenerrichtung gewähren, soll der modulare Aufbau derart weiter verbessert werden, dass selbst Umrüstungen für andere Fertigungsvorgänge oder völlig neue Werkstücke insbesondere in Hinblick auf den Werkstückträgertransport zwischen Fertigungsmodule schnell und einfach abgewickelt werden können.

Die Aufgabe wird mit den Merkmalen des Patentanspruch 1 gelöst. Weitere Einzelheiten der Erfindung gehen aus Unteransprüchen im Zusammenhang mit der Beschreibung und der Zeichnung hervor.

Die Figuren verdeutlichen jeweils perspektivisch, stark verkleinert, und in Grundzügen eine modular aufgebaute, automatische Fertigungs- und Montageanlage auf Basis eines Transfersystems mit in Hauptabmaßen identischen Fertigungsmodulen mit entsprechenden Stationen die insbesondere für spanlose aber prinzipiell auch für spanende Bearbeitungsverfahren anwendbar sind.

Die Module sind einheitlich und hinsichtlich ihrer Hauptabmaße standardisiert ausgeführt. Zur einfachen Variation der Anlage sind Höhe und Tiefe der Module identisch, während ihre Breite generell unterschiedlich sein kann. Beispielsweise können schmale Module ausgebildet werden, welche weniger komplexe Arbeiten ausführen, wie beispielsweise eine seitliche Umsetzbewegung. Daher kann die Breite (510 mm) derartiger, "schmaler" Module prinzipiell geringer - vorzugsweise etwa halb so groß - bemessen sein, wie die Breite (1020mm) eines Standardmoduls.

Es können minimal zwei und maximal beliebig viele Fertigungsmodule kombiniert werden.

Ein Modul besteht im Grundaufbau aus einem Tisch (Platte mit Profiluntergestell), auf dem Gleitelemente eines Werkstückträgers reibungsarm und dennoch stabil gleiten können, so dass Bearbeitungskräfte in z-Hauptachsrichtung direkt in den Tisch eingeleitet werden können. In x-y-Hauptachsrichtung wirkende Kräfte werden durch die Servomotor-Antriebe oder diesen vorgeschaltete, selbsthemmende Getriebe aufgefangen.

Mittel zur Energieversorgung und Informationsversorgung sowie zur Kommunikation sind zwischen den einzelnen Fertigungsmodulen wie auch zur Vernetzung mit einem übergeordneten elektronischen Leitstand vorgesehen. Diese Mittel sind elektrischer, hydraulischer und/oder pneumatischer Art. Die erforderlichen Energie- und Signalleitungen sind bei allen Fertigungsmodulen an standardisierten Orten platziert und vorzugsweise in das Profiluntergestell integriert. Die Leitungen können mittels Steckkupplungen einfach verbunden und bei Bedarf wieder gelöst werden, so dass Abwandlungen des Layouts von dem Transferstrassensystems einfach vorgenommen werden können.

Oberhalb des Tisches ist ein Rahmen angeordnet, welcher eine Verkleidung des Moduls mit Türen, Wänden oder ähnlichem ermöglicht, so dass in dem Bearbeitungsraum eine saubere, lärmgedämmte und betriebssichere Atmosphäre zur Durchschleusung und Bearbeitung der Werkstücke herrscht. Maßnahmen zur Luftreinhaltung (Partikelfilterung) sind möglich, um Verunreinigungen und unbeabsichtigte Verstopfungen der feinen Bohrungen zu vermeiden.

Jedes Fertigungsmodul umfasst eine oder mehrere, vorzugsweise ortsfest angeordnete Werkzeugaufnahmen mit Servomotor-Antrieben. Ortsfest bezieht sich auf die x-y-Hauptachsrichtung und versteht sich in diesem Zusammenhang so, dass die Werkzeugaufnahme zwar - beispielsweise für einen Werkzeugwechsel - in der x-y-Hauptachsrichtung verfahren werden kann. Im Rahmen einer Werkstückbearbeitung werden jedoch Verfahrbewegungen in x- und y-Richtung von dem Werkstück ausgeführt. Das Werkzeug ist in dieser Ebene fest gelegt.

Auf dem Tisch befinden sich Stationen 1,2,3,4,5 die einen Werkzeugeinschub aufweisen. Bei dem Werkzeug handelt es sich beispielsweise um ein Press-, Stanz- oder Biegewerkzeug, das mittels einem Antrieb oder Aktuator in z-Hauptachsrichtung bewegbar ist. Ein Säulengestell besitzt einen vorzugsweise vertikal in Z-Hauptachsrichtung arbeitenden Aktuator (z.B. Elektro-Servopresse, Hydraulikpresse, Pneumo-Hydraulische Presse und/oder Fügemodul mit Werkzeugen) für auswechselbare Bearbeitungswerkzeuge. Die Aktuatoren sind vorzugsweise als hydraulisch, pneumatisch oder elektrisch/elektromagnetisch angetriebene Kolben-Zylindereinheiten ausgebildet. Damit können Press-, Füge- und Bearbeitungsprozesse in z-Hauptachsenrichtung (Vertikalrichtung) von oben nach unten vorgenommen werden. Andere, alternative Bestückungen oder Ausrüstungen der Module wie beispielsweise Umsetzer oder ähnliches mehr sind denkbar.

Die Werkstücke werden zum Einschleusen in das Transfersystem definiert auf einem Werkstückträger abgelegt, und auf diesem zwecks Bearbeitung eingespannt. Der Werkstückträger kann in x-y-Hauptachsrichtung vergleichbar einem Schlitten auf dem Tisch verschoben werden. Für die Verschiebung dient ein 2-achsiges CNC-System mit den Servomotor-Antrieben und mit Führungen zum definierten Verfahren des Werkstückträgers einschließlich Werkstück innerhalb des Bearbeitungsraumes. Die Servomotor-Antriebe stellen somit eine definierte Positionier- und Vorschubbewegung zur Bearbeitung von Werkstücken WS sicher, und gewährleisten während der Bearbeitung auch eine entsprechende Lagefixierung. Des weiteren dienen die Servomotor-Antriebe jeweils auch für den Transfer des Werkstückträgers von Fertigungsmodul zu Fertigungsmodul. Zu diesem Zweck sind Haltemittel (Indexgreifer) vorgesehen, die (einen oder mehrere) Werkstückträger definiert halten, in das Fertigungsmodul einziehen, innerhalb des Arbeitsraumes in die gewünschten Positionen verschieben (1 bis n Positionen innerhalb des Bearbeitungsraumes eines Fertigungsmoduls sind denkbar) und den Werkstückträger samt Werkstück WS von einem gegenwärtigen Fertigungsmodul zur weiteren Be- und Verarbeitung an ein nachfolgendes Fertigungsmodul übergeben. Für den Werkstücktransfer ist folglich kein wartungs- und verschleißanfälliges Gurtband erforderlich.

Der Rücklauf von Werkstücken und Werkstückträgern kann mit Hilfe eines Förderbandes vorgenommen werden, welches auf einer Rückseite des Transferstrassensystems vorgesehen ist, wie dies schematisch aus der oben genannten Patentanmeldung hervorgeht.

Es versteht sich, dass jedes Fertigungsmodul mit Schaltern und/oder Sensoren zur Erfassung von Maschinen-, Werkzeug- und Werkstückinformationen versehen ist, welche mit wenigstens einer lokalen elektronischen Steuer- und Regeleinheit für die Antriebe verbunden sind. Die Geber, Schalter und Sensoren dienen zum Abfragen von Positionen, Belegungen und sonstigen Informationen, die in der Steuerung, dem Maschinenschutz oder für den Bedienerschutz verarbeitet werden können. Eine lokale Steuer- und Regeleinheit mit integriertem Maschinenschutz ermöglicht eine völlig autarke Funktion jedes Fertigungsmoduls. Vorteilhafterweise ist jedes Fertigungsmodul dadurch einfach austauschbar, was sich insbesondere auch auf das Werkstückträgerhandling bezieht. Durch den prinzipiell gleichen und ggf. sogar identischen Aufbau der Fertigungsmodule ist es sogar denkbar, diese flexibel an beliebiger Stelle innerhalb des Transfersystems anzuordnen.

Obwohl die Steuerung wie auch die Sicherheitseinrichtungen autark für jedes Modul vorgesehen sind, kommunizieren diese modulübergreifend. Das heißt, dass jedes Fertigungsmodul stets zumindest über den Status, Bearbeitungsstand oder ähnlichem mehr betreffend benachbarte Fertigungsmodule informiert ist. Gegebenenfalls kommt in jedem Fertigungsmodul ein Bilderfassungsmittel zum Einsatz, dessen Informationen zu den oben genannten Zwecken in der elektronischen Steuerung/Maschinenschutz/Bedienerschutz verarbeitet werden.

Generell ist das Transfersystem für alle serientechnisch relevanten spanenden und spanlosen Bearbeitungsvorgänge geeignet. Beispielhaft sei genannt: Verstemmen, Stanzen, Umformen, Nieten, Kleben, Schweißen, Ablegen, Zerspanen, Messen, Prüfen und vieles mehr. Das Transfersystem eignet sich jedoch ganz besonders für die Herstellung von Pumpenbohrungen, weil diese in Hinblick auf übereinstimmende Durchmesser mit ein- und demselben Werkzeug gefertigt werden können, oder beispielsweise für sogenannte Verkugelungen, bei denen eine harte Wälzlagerkugel aus Wälzlagerstahl in einer Bohrung eines Aufnahmekörpers aus verhältnismäßig weichem Werkstoff eingepresst wird, um auf diesem Wege einen kostengünstigen, druckmitteldichten Bohrungsverschluss zu erhalten. Eine andere potentielle Anwendung betrifft sogenannte Clinchverbindungen für elektromagnetisch betätigbare Ventilgehäuse, Pumpenlaufbuchsen, Deckel oder ähnlichem mehr.

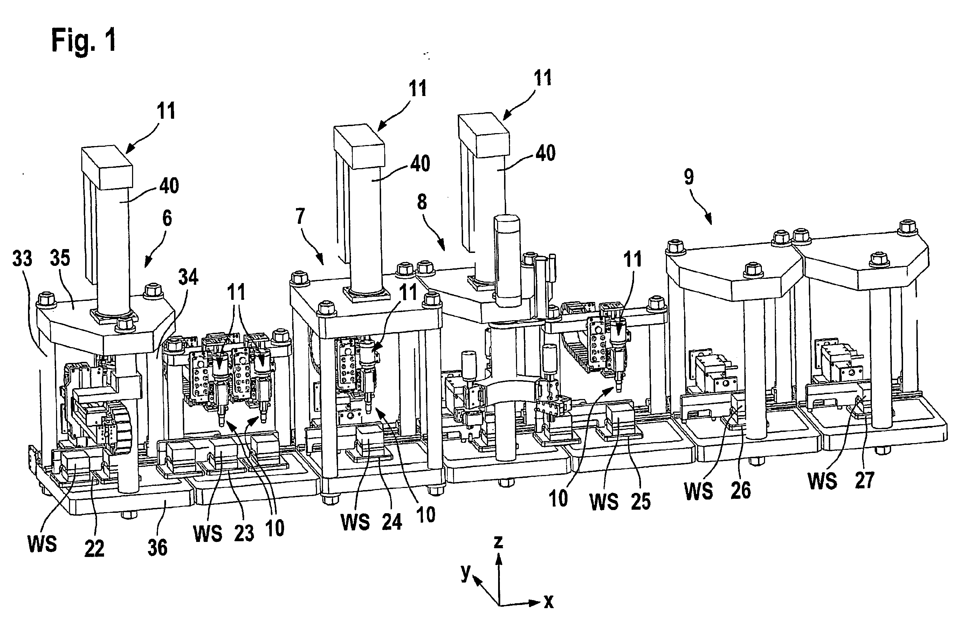

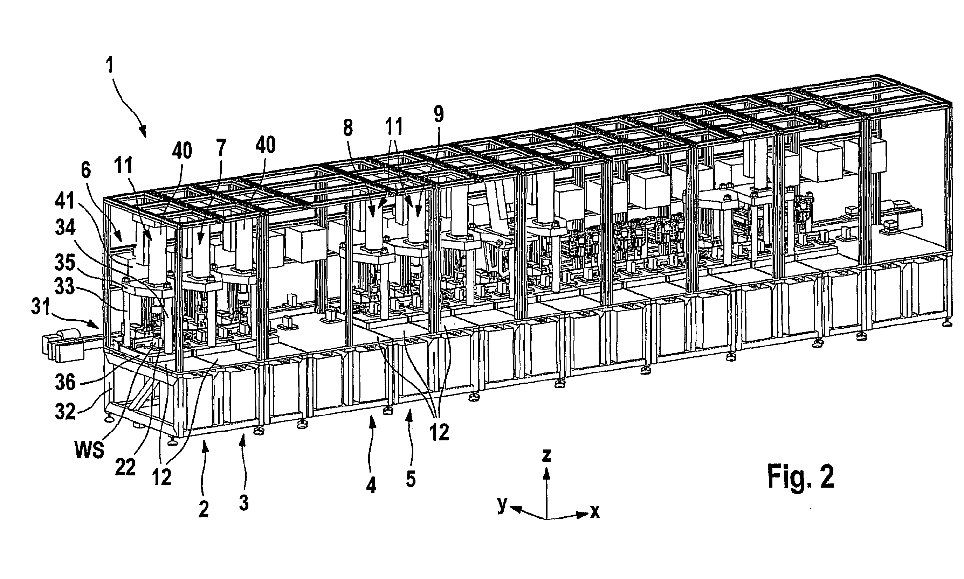

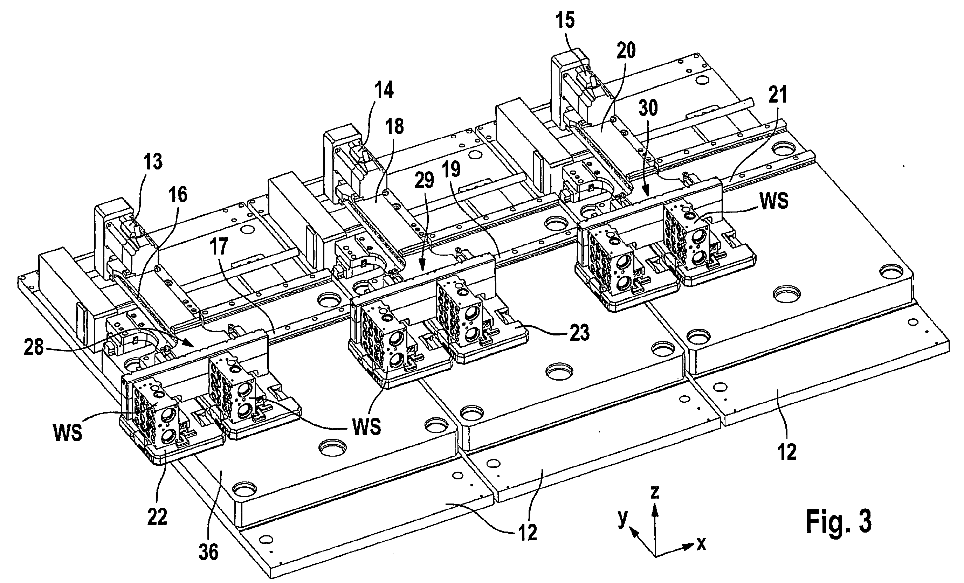

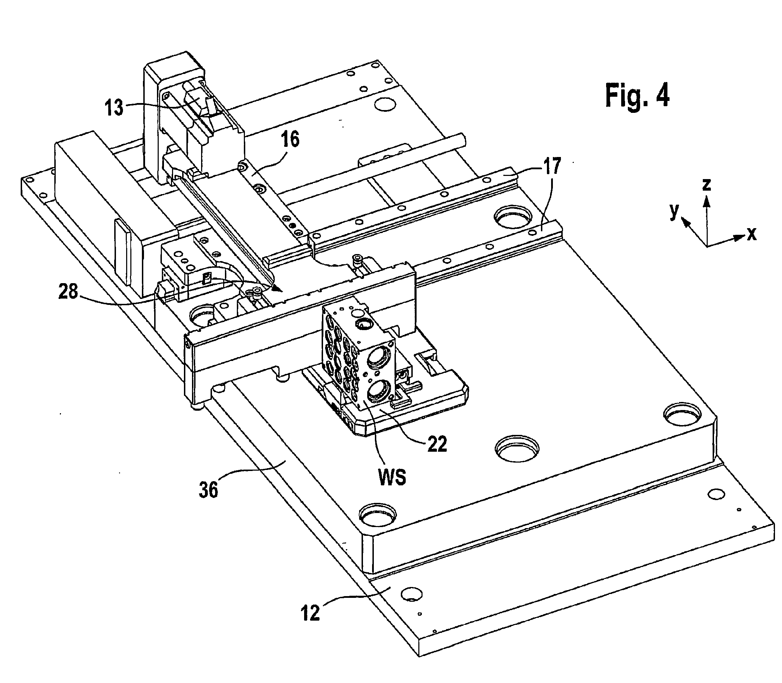

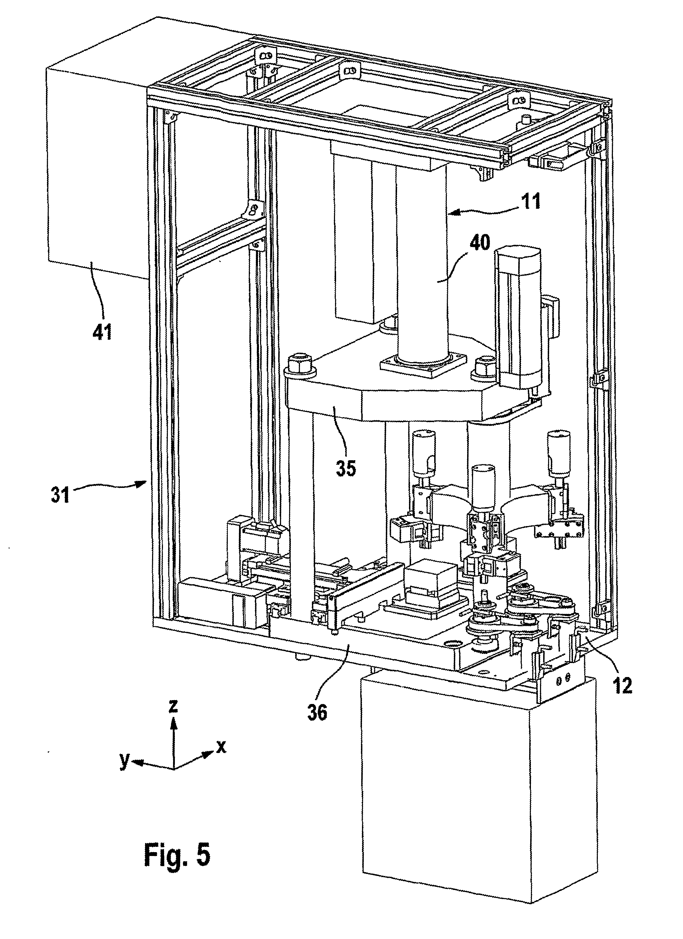

Fig. 1 zeigt eine bevorzugte Ausführungsform eines Transfersystems 1 in Gestalt einer automatischen Fertigungs- und Montageanlage. Eine derartige Anordnung mit mehreren verketteten Modulen 2,3,4,5 wird auch Layout genannt und umfasst in Hauptabmassen wie insbesondere bezüglich mechanischen oder elektrischen Anschlussmitteln identische Fertigungsmodule 6,7,8,9 für vorzugsweise spanlose und gegebenenfalls spanende Bearbeitungsverfahren. Es können minimal zwei und maximal beliebig viele hintereinander angeordnete Module 2,3,4,5 vorgesehen sein, ohne die Erfindung zu verlassen.

Jedes Fertigungsmodul 6,7,8,9 umfasst einen Tisch 12 zur Aufnahme von Bearbeitungskräften und eine oder mehrere ortsfeste Werkzeugaufnahmen 10 mit einem Aktuator als Antrieb für eine Werkzeugbewegung. Ortsfest bezieht sich in Hinblick auf die jeweils verdeutlichte x-y-Hauptachsrichtung und versteht sich in diesem Zusammenhang so, dass die Werkzeugaufnahme 10 ausnahmsweise (beispielsweise für einen Werkzeugwechsel oder zum Abholen von montagebereiten Bauteile aus einem nicht gezeigten Speicher, Sortierer oder ähnlichem mehr) einen Ortswechsel durchführen kann. Für den direkten Bearbeitungsvorgang werden die notwendigen Verfahrbewegungen in x- und y-Hauptachsrichtung jedoch ausschließlich von dem Werkstück WS ausgeführt.

Es versteht sich, dass jedes Fertigungsmodul 6,7,8,9 mit nicht weiter verdeutlichten Schaltern und/oder Sensoren zur Erfassung und Überwachung von Maschinen-, Werkzeug- und Werkstückprozessen bzw. -informationen versehen ist, welche mit wenigstens einer lokalen elektronischen Steuer- und Regeleinheit 41 für Servomotor-Antriebe 13,14,15 verbunden sind. Die Vielzahl von Gebern, Sensoren und Schaltern sind zum Abfragen von Positionen, Belegungen etc. vorgesehen, und dienen unter anderem auch dem Maschinenschutz wie auch dem Bedienerschutz. Diese Sicherheitseinrichtungen (Maschinenschutz), wie auch die Steuerung erfolgt modulübergreifend. Das heisst, dass eine Leitstelle (IPC-Steuerung) mehrere Fertigungsmodule 6-9 und deren Sicherheitseinrichtungen zu steuern und überwachen vermag. Gegebenenfalls verfügt jedes Fertigungsmodul 6-9 noch über Bilderfassungsmittel. Die elektrischen Bauteile sind mit einer lokalen elektronischen Steuereinheit verbunden, welche in das Modul 2-5 integriert ist. Durch diese Bauweise ist jedes Fertigungsmodul 6-9 prinzipiell völlig autark, was sich insbesondere auch auf das Werkstückträgerhandling bezieht. Durch den prinzipiell gleichen ggf. sogar identischen Aufbau der Fertigungsmodule 6-9 ist es sogar denkbar, Fertigungsmodule 6-9 prinzipiell an beliebiger Stelle innerhalb des Transfersystems 1 anzuordnen, wobei die Programmierung von einer übergeordneten Leitstelle geladen werden kann.

Des weiteren sind Mittel zur Energieversorgung und Informationsversorgung sowie Kommunikation zwischen den einzelnen Fertigungsmodulen 6,7,8,9 wie auch zur Vernetzung mit einem übergeordneten, elektronischen Leitstand vorgesehen. Zur erstmaligen Programmierung einer lokalen elektronischen Steuerung kann ein entsprechendes Programm mit Arbeitsschritten wie oben beschrieben von einer übergeordneten Leitstelle geladen werden.

Die Servomotor-Antriebe 13,14,15 für Schlitten 28,29,30 dienen zum Transfer von Werkstück WS mitsamt Werkstückträger 22-27 von Fertigungsmodul 6-9 zu Fertigungsmodul 6-9. Es sind jedoch weitere Funktionen vorhanden, was den besonderen Vorteil der Erfindung begründet. Denn eine weitere Aufgabe betrifft die Positionier- und Vorschubbewegung des Werkstückes WS während der Bearbeitungsprozesse. Mit anderen Worten dienen die Servormotor-Antriebe 13,14,15 nicht nur dem Transfer des Werkstücks WS mit Werkstückträger 22-27 von Fertigungsmodul 6-9 zu Fertigungsmodul 6-9, sondern auch zur Ausführung von Vorschubbewegungen zur Bearbeitung der Werkstücke WS. Durch diese Doppelfunktion wird wenigstens ein konventionelles Transportband eingespart. Ein Schlitten 28,29,30 mit seinen Haltemitteln (Indexgreifer) indexiert den Werkstückträger 22-27, zieht diesen in ein Fertigungsmodul 6-9 ein, verschiebt innerhalb des Fertigungsmoduls 6-9 in die jeweils erforderliche Bearbeitungsposition (1 bis n Positionen innerhalb des Bearbeitungsraumes eines Fertigungsmoduls 6-9 sind möglich) und übergibt den Werkstückträger 22-27 samt Werkstück WS von einem gegenwärtigen Fertigungsmodul 6-9 zur weiteren Be- und Verarbeitung an ein folgendes Fertigungsmodul 6-9.

Press-, Füge- und Bearbeitungsprozesse können in einer z-Hauptachsenrichtung von oben nach unten vorgenommen werden. Zu diesem Zweck sind Antriebe 11 vorgesehen, die vorzugsweise als hydraulisch, pneumatisch oder elektrisch/elektromagnetisch angetriebene Kolben-Zylindereinheiten 40 ausgebildet sind. Bei der Bearbeitung sind die Werkstücke WS definiert auf dem Werkstückträger 22-27 abgelegt (vorzugsweise auf dem Werkstückträger 22-27 eingespannt), welcher definiert innerhalb des Bearbeitungsraumes platziert ist. Der Werkstückträger 22-27 liegt auf dem Tisch 12 auf, so dass der Tisch 12 die Bearbeitungskräfte in z-Hauptachsrichtung aufnimmt.

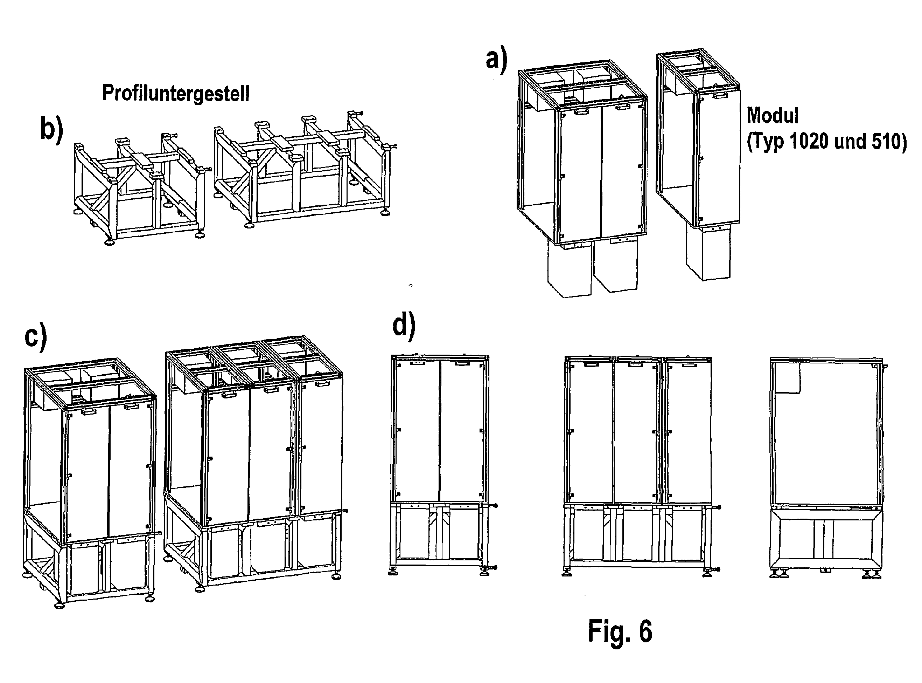

Ein Modul 2-5 besteht im Grundaufbau aus dem Fertigungsmodul 6-9 mit Tisch 12 (Tischplatte mit Profiluntergestell), auf dem plattenförmige Werkstückträger 22-27 mit Gleitauflagen in x-y-Hauptachsrichtung gleiten können, und wobei Bearbeitungskräfte in z-Hauptachsrichtung direkt in den Tisch 12 eingeleitet werden. In x-y-Hauptachsrichtung erfolgt eine Krafteinleitung über die zwischengeschalteten Servomotor-Antriebseinheiten 13-15, die mit oder ohne Getriebe ausgebildet sein können. Von Vorteil kann ein selbsthemmendes Getriebe sein, welches die erforderlichen Haltemomente reduziert. Der Aufbau eines Fertigungsmoduls 6-9 ist vorteilhafterweise wie folgt. Auf dem Tisch 12 befindet ein Rahmen 31 mit einem Säulengestell mit einem vertikal in Z-Hauptachsrichtung arbeitendem Aktuator für Bearbeitungswerkzeuge (z.B. Elektro-Servopresse, Hydraulikpresse, pneumo-hydraulische Presse und/oder Fügemodul mit Werkzeugen). Die Module 2-5 wie auch die Fertigungsmodule 6-9 sind einheitlich und hinsichtlich ihrer Hauptabmasse standardisiert ausgeführt. Zur einfachen Variation des Transfersystems 1 sind Höhe und Tiefe identisch, während die Breite unterschiedlich sein kann. Dabei sind insbesondere überbreite Module mit einheitlich vervielfachter Breite oder schmale Module mit einheitlich reduzierter Breite denkbar. Für die Skalierung der Breite bieten sich ganzzahlige vielfache (beispielsweise doppelte Standardbreite) oder entsprechende Reduktionsfaktoren (beispielsweise halbierte Standardbreite) an. Aus der Fig. 6 gehen beispielsweise schmale Module (Typ 510 mit 510 mm Breite) mit einem Rastermass hervor, dessen Breite halb so groß ist, wie die Breite eines Standardmoduls (Typ 1020 mit 1020 mm Breite).

Generell ist das Transfersystem 1 für alle serientechnisch relevanten spanenden und spanlosen Produktionsvorgänge geeignet. Beispielhaft sei genannt: Verkugeln, Verstemmen, Stanzen, Umformen, Nieten, Kleben, Schweißen, Ablegen, Zerspanen, Messen, Prüfen und vieles mehr.

Die Erfindung verfügt über folgende wesentliche Vorteile:
- Der Transport eines Werkstückträgers 22-29 mit Werkstück WS erfolgt in jedem Fertigungsmodul 6-9 völlig autark.
- Die Positionierung der Werkstückträger 22-29 innerhalb des jeweiligen Fertigungsmoduls 6-9 wird mit dem gleichen CNC-(x-y)Achsensystem und mit den gleichen Servormotor-Antrieben 13-15 ausgeführt, wie der Werkstückträger-Transfer. Ein gesondertes Transfer-Förderband entfällt.
- Die Indexierung von Werkstückträgern-22-27 erfolgt durch das CNC-Achsensystem mittels eines Indexgreifers. Der Indexgreifer greift definiert an dem Werkstückträger 22-27 an. Es ist keine zusätzliche Index-Hebeeinheit erforderlich.
- Bearbeitungskräfte (Pressen, Verstemmen, usw.) werden in Vertikalrichtung direkt über den Werkstückträger 22-27 in den flachen Tisch 12 eingeleitet. Es ist keine zusätzliche Hub- oder Abstützeinheit erforderlich.
- Die Werkzeugträger 22-27 stehen weitgehend fest auf dem Tisch 12 und führen - bis auf die Bewegungen in Hauptachsrichtung weitgehend keine Bewegungen (Vorschub-, Zustell- oder ähnliche Bewegung) aus. Dies ermöglicht einen einfachen, kostengünstigen und standardisierten aber dennoch stabilen Aufbau mit geringen Elastizitäten. (Presszellen, Fügezellen, Prüf-und Abfragezellen usw.). Darüber hinaus lässt sich sehr leicht ein automatisches Werkzeugwechselsystem integrieren.
- Jedes Modul 2-5 hat seine eigene Schutzeinrichtung, mit autark arbeitendem Sicherheitskreis und einer eigenen IPC-Steuerung zur Überwachung und Steuerung der Maschinen. Dieses autarke System ist jedoch über ein Bus-System mit einem elektronischen Leitstand vernetzbar.
- Der völlig autonome Aufbau ermöglicht eine Flexibilisierung zwecks Anpassung an geänderte Fertigungsaufgaben. Insbesondere wird ein schneller Austausch von Werkzeugen, Werkzeugeinsätzen o.ä. ermöglicht, wenn das Fertigungsmodul 6-9 standardisierte Einschubaufnahmen aufweist (z.B. zwecks Erweiterung, Umbau, Reparatur oder ähnlichem).
- Die x/y-CNC-Servoachsensysteme können modular austauschbar ausgebildet sein, um auch diesbezüglich Flexibilisierung zu bieten. Beispielsweise ist folgendes denkbar:
   1. x- oder y-Pneumatik-Achse mit zwei festen Endlagen: Werkstückträger-Transfer mit 2 festen Bearbeitungspositionen oder lediglich Durchschleusen des Werkstückträgers von Ort A zu Ort B
   2. Y-CNC-Achse: Werkstückträgertransfer und flexible Bearbeitungsposition in Y-Richtung
   3. X-Y-Doppelachsensystem: Werkstückträger-Transfer und hochflexible Bearbeitungspositionierung ohne feste Endlagen in X- und Y-Richtung.

Ein wesentlicher Punkt der Erfindung lautet wie folgt:

Mit Hilfe eines CNC-Servoachsen-Systems werden Werkstückträger 22-27 mit Werkstück WS in einem Fertigungsmodul 6-9 autonom positioniert. Das gleiche System erledigt auch Transferaufgaben, d.h. Einzug, Transfer innerhalb des Transferstrassensystems 1 und Ausschub aus dem System. Der Werkstückträger 22-27 ist in jeder Position durch dieses System definiert indexiert. Bearbeitungskräfte werden direkt in den Tisch 12 jedes Moduls 6-9 eingeleitet. Jedes Fertigunsmodul 6-9 hat eine eigene, abgesicherte Schutzeinrichtung und eine autarke elektronische Steuerung (IPC). Die Kommunikation und Synchronisation mehrerer Fertigungsmodule 6-9 untereinander innerhalb einer Bearbeitungszelle erfolgt über Bus-Systeme. Der Datentransfer zwischen Fertigungsmodulen 6-9 und dem Leitstand (Leitrechner) betreffend Prüf- und Maschinenparameter wie insbesondere die Messwerte einer Soll- Istwertüberwachung einschließlich der Ablaufprogramme wie auch der Datentransfer zwischen den einzelnen Fertigungsmodulen erfolgt über das Bus-System.

### Bezugszeichenliste

- 1: Transfersystem
- 2: Modul
- 3: Modul
- 4: Modul
- 5: Modul
- 6: Fertigungsmodul
- 7: Fertigungsmodul
- 8: Fertigungsmodul
- 9: Fertigungsmodul
- 10: Werkzeugaufnahme
- 11: Antrieb
- 12: Tisch
- 13: Servormotor-Antrieb
- 14: Servormotor-Antrieb
- 15: Servormotor-Antrieb
- 16: Führung
- 17: Führung
- 18: Führung
- 19: Führung
- 20: Führung
- 21: Führung
- 22: Werkstückträger
- 23: Werkstückträger
- 24: Werkstückträger
- 25: Werkstückträger
- 26: Werkstückträger
- 27: Werkstückträger
- 28: Schlitten
- 29: Schlitten
- 30: Schlitten
- 31: Rahmen
- 32: Profiluntergestelll
- 33: Säule
- 34: Säule
- 35: Kopfplatte
- 36: Fußplatte

- 40: Kolben-Zylinder-Einheit
- 41: Steuer- und Regeleinheit

- WS: Werkstück
- X,Y,Z: Hauptachsrichtung

## Patentansprüche

1. Modulares Transfersystem (1) für Werkstücke (WS) umfassend wenigstens zwei, in Hauptabmaßen identische Module (2,3,4,5) mit Fertigungsmodulen (6,7,8,9) für spanende oder spanlose Bearbeitungsverfahren, jeweils umfassend eine oder mehrere Werkzeugaufnahmen (10) mit einem Antrieb (11) für eine Werkzeugbewegung, und mit einem Tisch (12) zur Aufnahme von Bearbeitungskräften umfassend Servormotor-Antriebe (13,14,15) sowie Führungen (16,17,18,19,20,21) zum gezielten Verschieben eines Werkstückträgers (22,23,24,25,26,27) in Richtung von Hauptachsen (x,y) innerhalb eines Bearbeitungsraumes, mit Schaltern und/oder Sensoren zur Erfassung von Maschinen-, Werkzeug- und Werkstückinformationen, welche mit wenigstens einer lokalen elektronischen Steuer- und Regeleinheit (41) für die Servomotor-Antriebe (13,14,15) verbunden sind, und mit Mitteln zur Energieversorgung und Informationsversorgung sowie Kommunikation zwischen den Fertigungsmodulen (6,7,8,9), und mit vorzugsweise einem übergeordneten elektronischen Leitstand, wobei die Servomotor-Antriebe (13,14,15) für einen Schlitten (28,29,30) vorgesehen sind, **dadurch gekennzeichnet, dass** die Servomotor-Antriebe (13,14,15) Positionierbewegungen sowie Vorschubbewegungen zur Bearbeitung von Werkstücken (WS) ausführen und zusätzlich für den Transfer des Werkstückträgers (22-27) von Fertigungsmodul (6-9) zu Fertigungsmodul (6-9) eingerichtet sind.

2. Modulares Transfersystem nach Anspruch 1, **dadurch gekennzeichnet, dass** die Werkzeugaufnahmen (10) ortsfest oder bewegbar angeordnet sind.

3. Modulares Transfersystem nach Anspruch 1, **dadurch gekennzeichnet, dass** ein Fertigungsmodul (6-9) wenigstens eine Kolben-Zylindereinheit (40) zum spanlosen Bearbeiten eines Werkstückes (WS) aufweist.

4. Modulares Transfersystem nach Anspruch 1, **dadurch gekennzeichnet, dass** ein Fertigungsmodul (6-9) wenigstens einen Werkzeugspeicher und Mittel für einen Werkzeugwechsel wie insbesondere ein Magazin, oder einen Revolver aufweist.

5. Modulares Transfersystem nach Anspruch 1, **dadurch gekennzeichnet, dass** an ein Fertigungsmodul (6-9) ein Zuführsystem für Teile, vorzugsweise ein Zuführsysteme für Kleinstteile wie insbesondere ein Sortierer und dessen Fördervorrichtung angeschlossen ist.

6. Modulares Transfersystem nach Anspruch 1, **dadurch gekennzeichnet, dass** ein Fertigungsmodul (6-9) einen oder mehrere, parallel geschaltete Handling- und Montageroboter aufweist, welche zu verarbeitende Werkstücke (WS) und/oder Bauteile selbständig aus einem Teilespeicher entnehmen, die Bauteile transferieren und an einem Montageort an dem Werkstück (WS) platzieren sowie vorzugsweise fest montieren.

7. Modulares Transfersystem nach Anspruch 6, **dadurch gekennzeichnet, dass** die Handling- und Montageroboter an einem Rahmen (31) des Fertigungsmoduls (6-9) befestigt sind.

8. Modulares Transfersystem nach Anspruch 1 oder 7, **dadurch gekennzeichnet, dass** der Rahmen (31) auf einem Tisch (12) eines Fertigungsmoduls (6-9) installiert ist, und dass der Rahmen (31) wenigstens zwei Säulen (33,34) sowie zumindest eine Kopfplatte (35) zur Aufnahme von Säulenenden umfasst.

9. Modulares Transfersystem nach Anspruch 8, **dadurch gekennzeichnet, dass** gegenüberliegende Säulenenden unmittelbar in dem Tisch (12) des Fertigungsmoduls (6-9) oder in einer Fussplatte (36) des Rahmens (31) aufgenommen sind.

10. Modulares Transfersystem nach Anspruch 1, **dadurch gekennzeichnet, dass** der Schlitten (28,29,30) mit Haltemitteln für den Werkstückträger (22-27) und insbesondere mit Kupplungsmitteln für den Werkstückträger (22-27) versehen ist.

11. Modulares Transfersystem nach Anspruch 10, **dadurch gekennzeichnet, dass** die Haltemittel zwei Fixierungspunkte aufweisen, mit denen der Werkstückträger (22-27) in x- und y-Hauptachsrichtung an dem bewegbaren Schlitten (28,29,30) befestigt ist, und dass der Werkstückträger (22-27) in z-Hauptachsrichtung auf dem Tisch (12) aufliegt.

12. Modulares Transfersystem nach Anspruch 10 und 11, **dadurch gekennzeichnet, dass** die Haltemittel als zylindrische Bolzen ausgebildet sind, welche in z-Hauptachsrichtung in Ausnehmungen an dem Werkstückträger (22-27) eingreifen.

13. Modulares Transfersystem nach Anspruch 1 oder 10, **dadurch gekennzeichnet, dass** der Werkstückträger (22-27) federvorgespannte, oder pneumatische, oder hydraulische oder elektromagnetische Werkstückspannmittel aufweist.

14. Modulares Transfersystem nach Anspruch 10, **dadurch gekennzeichnet, dass** der Werkstückträger (22-27) Kupplungsmittel aufweist, um an einen Energiebus oder einen Informationsbus des Transfersystems (1) anzudocken.

15. Modulares Transfersystem nach Anspruch 1, **dadurch gekennzeichnet, dass** der Werkstückträger (22-27) Geber, und/oder Schalter und/oder Sensoren aufweist.

16. Modulares Transfersystem nach Anspruch 10, **dadurch gekennzeichnet, dass** der Schlitten (28,29,30) Kupplungsmittel zum Anschluß an die Kupplungsmittel des Werkstückträgers (22-27) aufweist, und dass die Kupplungsmittel automatisch zusammen mit den Haltemitteln zwischen Schlitten und Werkstückträger fixiert oder gelöst werden.

17. Modulares Transfersystem nach Anspruch 1, **dadurch gekennzeichnet, dass** ein Fertigungsmodul (6-9) ein optisches oder elektronisches Bildverarbeitungssystem aufweist.

18. Modulares Transfersystem nach Anspruch 1, **dadurch gekennzeichnet, dass** jedes Fertigungsmodul (6-9) einen Energiebus und einen Informationsbus aufweist.

19. Modulares Transfersystem nach Anspruch 1, **dadurch gekennzeichnet, dass** das Tranfersystem (1) modular aufgebaut ist, und mehrere in Linie hintereinander nach einem bestimmten Layout geschaltete Fertigungsmodule (6-9) aufweist, wobei die Fertigungsmodule (6-9) untereinander mit mechanischen Kupplungsmitteln, und/oder mit Kupplungsmitteln für den Energiebus und/oder mit Kupplungsmitteln für den Informationsbus versehen sind.

20. Modulares Transfersystem nach Anspruch 19, **dadurch gekennzeichnet, dass** die Kupplungsmittel derart ausgebildet sind, dass diese ohne Werkzeuganwendung lösbar sowie verriegelbar sind.

21. Modulares Transfersystem nach einem der vorhergehenden Ansprüche, **dadurch gekennzeichnet, dass** alle Fertigungsmodule (6-9), zumindest in Hinblick auf Einschubaufnahmen, identisch ausgebildet sind, und dass eine Fertigungsanpassung oder Fertigungsänderung mittels einfachem Programmladevorgang aus dem elektronischen Leitstand und erforderlichenfalls unter zusätzlichem Austausch eines Fertigungsmoduls (6-9) vorgenommen wird.

## Claims

1. Modular transfer system (1) for workpieces (WS) comprising at least two modules (2, 3, 4, 5) being identical in their leading dimensions and including manufacturing modules (6, 7, 8, 9) for metal-cutting or non-cutting machining processes, each comprising one or more tool mounting fixtures (10) with a drive (11) for tool movement, and with a table (12) for the accommodation of machining forces comprising servo motor drives (13, 14, 15) and guides (16, 17, 18, 19, 20, 21) for the targeted displacement of a workpiece carrier (22, 23, 24, 25, 26, 27) in the direction of main axes (x, y) within a machining space, including switches and/or sensors for gathering information related to machines, tools and workpieces, which connect to at least one local electronic controlling and regulating unit (41) for the servo motor drives (13, 14, 15), and with means for the energy supply and information supply and communication among the manufacturing modules (6, 7, 8, 9), and with preferably one superior electronic control station, with the servo motor drives (13, 14, 15) being provided for a slide (28, 29, 30),
**characterized in that** the servo motor drives (13, 14, 15) perform positioning movements and feed motions for machining workpieces (WS) and additionally are adapted for the transfer of the workpiece carrier (22 to 27) from manufacturing module (6 to 9) to manufacturing module (6 to 9).

2. Modular transfer system as claimed in claim 1,
**characterized in that** the tool mounting fixtures (10) are arranged in a stationary or movable manner.

3. Modular transfer system as claimed in claim 1,
**characterized in that** a manufacturing module (6 to 9) includes at least one piston-and-cylinder assembly (40) for non-cutting machining of a workpiece (WS).

4. Modular transfer system as claimed in claim 1,
**characterized in that** a manufacturing module (6 to 9) includes at least one tool storage unit and means for the exchange of tools such as a magazine or a revolver in particular.

5. Modular transfer system as claimed in claim 1,
**characterized in that** connected to a manufacturing module (6 to 9) is a feed system for parts, preferably a feed system for very small parts such as a sorter and its delivery device in particular.

6. Modular transfer system as claimed in claim 1,
**characterized in that** a manufacturing module (6 to 9) includes one or more parallel arranged handling and assembling robots, which independently take workpieces (WS) and/or components to be machined from a parts storage unit, transfer the components, and place them at an assembly location at the workpiece (WS), and preferably mount them to be fixed.

7. Modular transfer system as claimed in claim 6,
**characterized in that** the handling and assembling robots are attached to a frame (31) of the manufacturing module (6 to 9).

8. Modular transfer system as claimed in claim 1 or 7,
**characterized in that** the frame (31) is installed on a table (12) of a manufacturing module (6 to 9), and **in that** the frame (31) comprises at least two columns (33, 34) and at least one end plate (35) to accommodate column ends.

9. Modular transfer system as claimed in claim 8,
**characterized in that** opposite column ends are received directly in the table (12) of the manufacturing module (6 to 9) or in a base plate (36) of the frame (31).

10. Modular transfer system as claimed in claim 1,
**characterized in that** the slide (28, 29, 30) is equipped with holding means for the workpiece carrier (22 to 27) and in particular with coupling means for the workpiece carrier (22 to 27).

11. Modular transfer system as claimed in claim 10,
**characterized in that** the holding means include two points of fixation by means of which the workpiece carrier (22 to 27) is attached to the movable slides (28, 29, 30) in the x- and y-main axis direction, and **in that** the workpiece carrier (22 to 27) abuts on the table (12) in the z-main axis direction.

12. Modular transfer system as claimed in claims 10 and 11,
**characterized in that** the holding means are designed as cylindrical pins, which engage into recesses at the workpiece carrier (22 to 27) in the z-main axis direction.

13. Modular transfer system as claimed in claim 1 or 10,
**characterized in that** the workpiece carrier (22 to 27) includes spring-loaded, or pneumatic, or hydraulic, or electromagnetic workpiece clamping means.

14. Modular transfer system as claimed in claim 10,
**characterized in that** the workpiece carrier (22 to 27) includes coupling means in order to connect to an energy bus or an information bus of the transfer system (1).

15. Modular transfer system as claimed in claim 1,
**characterized in that** the workpiece carrier (22 to 27) includes transducers, and/or switches, and/or sensors.

16. Modular transfer system as claimed in claim 10,
**characterized in that** the slide (28, 29, 30) includes coupling means for connecting to the coupling means of the workpiece carrier (22 to 27), and **in that** the coupling means together with the holding means are automatically fixed between slide and workpiece carrier, or detached therefrom.

17. Modular transfer system as claimed in claim 1,
**characterized in that** a manufacturing module (6 to 9) includes an optical or electronic picture processing system.

18. Modular transfer system as claimed in claim 1,
**characterized in that** each manufacturing module (6 to 9) includes an energy bus and an information bus.

19. Modular transfer system as claimed in claim 1,
**characterized in that** the transfer system (1) has a modular design, including several manufacturing modules (6 to 9) arranged in series-connection according to a defined layout, with the manufacturing modules (6 to 9) being provided with mechanical coupling means with respect to each other, and/or with coupling means for the energy bus, and/or with coupling means for the information bus.

20. Modular transfer system as claimed in claim 19,
**characterized in that** the coupling means are configured in such a way that they can be released and locked without the use of tools.

21. Modular transfer system as claimed in any one of the preceding claims,
**characterized in that** all manufacturing modules (6 to 9) have an identical design, at least with respect to slide-in accommodations, and **in that** an adaptation of manufacture or a change in manufacture is performed by means of a simple program loading operation from the electronic control station and, in case of need, by additionally exchanging a manufacturing module (6 to 9).

## Revendications

1. Système de transfert modulaire (1) pour pièces (WS) comprenant au moins deux modules (2, 3, 4, 5) identiques dans leur dimension principale avec des modules de fabrication (6, 7, 8, 9) pour procédé d'usinage avec ou sans enlèvement de copeaux, comprenant chacun un ou plusieurs logements d'outil (10) avec un dispositif d'entraînement (11) pour le mouvement d'un outil, et avec une table (12) pour absorber les forces d'usinage comprenant des dispositifs d'entraînement à servomoteur (13, 14, 15) ainsi que des guides (16, 17, 18, 19, 20, 21) pour la translation ciblée d'un porte-pièce (22, 23, 24, 25, 26, 27) en direction des axes principaux (x, y) à l'intérieur d'un espace d'usinage, avec des interrupteurs et/ou des capteurs pour relever des informations relatives à la machine, à l'outil et à la pièce, qui sont reliés à au moins une unité électronique locale de commande et de régulation (41) pour les dispositifs d'entraînement à servomoteur (13, 14, 15), et avec des moyens pour l'alimentation en énergie et l'alimentation en informations ainsi que la communication entre les modules de fabrication (6, 7, 8, 9), et avec de préférence un poste de conduite électronique supérieur, les dispositifs d'entraînement à servomoteur (13, 14, 15) étant prévus pour un chariot (28, 29, 30), **caractérisé en ce que** les dispositifs d'entraînement à servomoteur (13, 14, 15) exécutent des mouvements de positionnement ainsi que des mouvements d'avance pour l'usinage de pièce (WS) et sont aménagés en outre pour le transfert du porte-pièce (22-27) d'un module de fabrication (6-9) à un autre module de fabrication (6-9).

2. Système de transfert modulaire selon la revendication 1, **caractérisé en ce que** les logements d'outil (10) sont disposés fixes ou déplaçables.

3. Système de transfert modulaire selon la revendication 1, **caractérisé en ce qu'**un module de fabrication (6-9) comporte au moins une unité à cylindre et piston (40) pour l'usinage sans enlèvement de copeaux d'une pièce (WS).

4. Système de transfert modulaire selon la revendication 1, **caractérisé en ce qu'**un module de fabrication (6-9) comporte au moins un stockeur d'outils et des moyens pour un changement d'outil tel qu'en particulier un magasin ou un revolver.

5. Système de transfert modulaire selon la revendication 1, **caractérisé en ce qu'**un système d'amenée de pièces, en particulier un système d'amenée de petites pièces, tel qu'en particulier une trieuse et son dispositif de transport, est raccordé à un module de fabrication (6-9).

6. Système de transfert modulaire selon la revendication 1, **caractérisé en ce qu'**un module de fabrication (6-9) comporte un ou plusieurs robots de manipulation et de montage couplés en parallèle, qui prélèvent d'un stockeur de pièces des pièces (WS) à traiter et/ou des composants, transfèrent les composants et les placent sur la pièce (WS) en un emplacement de montage et les montent de préférence de manière fixe.

7. Système de transfert modulaire selon la revendication 6, **caractérisé en ce que** les robots de manipulation et de montage sont fixés à un cadre (31) du module de fabrication (6-9).

8. Système de transfert modulaire selon la revendication 1 ou 7, **caractérisé en ce que** le cadre (31) est installé sur une table (12) d'un module de fabrication (6-9), et **en ce que** le cadre (31) comprend au moins deux colonnes (33, 34) ainsi qu'au moins une plaque de tête (35) pour recevoir des extrémités de colonne.

9. Système de transfert modulaire selon la revendication 8, **caractérisé en ce que** des extrémités opposées de colonne sont reçues dans la table (12) du module de fabrication (6-9) ou dans une plaque de base (36) du cadre (31).

10. Système de transfert modulaire selon la revendication 1, **caractérisé en ce que** le chariot (28, 29, 30) est pourvu de moyens de retenue pour le porte-pièce (22-27) et en particulier de moyens d'accouplement pour le porte-pièce (22-27).

11. Système de transfert modulaire selon la revendication 10, **caractérisé en ce que** les moyens de retenue présentent deux points de fixation au moyen desquels le porte-pièce (22-27) est fixé sur le chariot (28, 29, 30) déplaçable, dans la direction de l'axe principal (x) et de l'axe principal (y), et **en ce que** le porte-pièce (22-27) repose sur la table (12) dans la direction de l'axe principal (z).

12. Système de transfert modulaire selon les revendications 10 et 11, **caractérisé en ce que** les moyens de retenue sont réalisés sous la forme de chevilles cylindriques qui s'engagent, dans la direction de l'axe principal (z), dans des évidements du porte-pièce (232-27).

13. Système de transfert modulaire selon la revendication 1 ou 10, **caractérisé en ce que** le porte-pièce (22-27) comporte des moyens de serrage de pièce précontraints par un ressort, ou pneumatiques, ou hydrauliques ou électromagnétiques.

14. Système de transfert modulaire selon la revendication 10, **caractérisé en ce que** le porte-pièce (22-27) comporte des moyens d'accouplement pour être amarré à un bus d'énergie ou un bus d'information du système de transfert (1).

15. Système de transfert modulaire selon la revendication 1, **caractérisé en ce que** le porte-pièce (22-27) comporte des transmetteurs, et/ou des interrupteurs et/ou des capteurs.

16. Système de transfert modulaire selon la revendication 10, **caractérisé en ce que** le chariot (28, 29, 30) comporte des moyens d'accouplement pour le raccordement aux moyens d'accouplement du porte-pièce (22-27), et **en ce que** les moyens d'accouplement sont automatiquement fixés aux moyens d'accouplement entre le chariot et le porte-pièce, ou séparés de ceux-ci.

17. Système de transfert modulaire selon la revendication 1, **caractérisé en ce qu'**un module de fabrication (6-9) comporte un système de traitement d'image optique ou électronique.

18. Système de transfert modulaire selon la revendication 1, **caractérisé en ce que** chaque module de fabrication (6-9) comporte un bus d'énergie et un bus d'information.

19. Système de transfert modulaire selon la revendication 1, **caractérisé en ce que** le système de transfert (1) est construit de façon modulaire, et comporte plusieurs modules de fabrication (6-9) couplés en ligne les uns derrière les autres selon un schéma déterminé, les modules de fabrication (6-9) étant pourvus de moyens mécaniques d'accouplement entre eux, et/ou de moyens d'accouplement pour le bus d'énergie et/ou de moyens d'accouplement pour le bus d'information.

20. Système de transfert modulaire selon la revendication 19, **caractérisé en ce que** les moyens d'accouplement sont réalisés de manière que ceux-ci puissent être déverrouillés ou verrouillés sans utilisation d'outil.

21. Système de transfert modulaire selon l'une des revendications précédentes, **caractérisé en ce que** tous les modules de fabrication (6-9) sont réalisés à l'identique, au moins en ce qui concerne les logements à embrochage, et **en ce qu'**il est procédé à une adaptation ou une modification de la fabrication au moyen d'une simple procédure de chargement de programme à partir du poste de conduite électronique et, si nécessaire, avec échange supplémentaire d'un module de fabrication (6-9).
